# EUROPEAN PATENT SPECIFICATION

(11) **EP 3 821 773 B1**
(45) Date of publication and mention of the grant of the patent: **13.05.2026**
(21) Application number: 19940167.0
(22) Date of filing: 29.10.2019
(51) Int. Cl.: A47J 43/046, A47J 43/07, A47J 19/02, A47J 27/04

(54) **FOOD PROCESSOR**
KÜCHENMASCHINE
ROBOT DE CUISINE

(30) Priority: 23.08.2019 CN 201910785229
(43) Date of publication of application: 19.05.2021
(73) Proprietor: KingClean Electric Co., Ltd., Suzhou New District Suzhou Jiangsu 215163 (CN)
(72) Inventor: NI, Zugen, Suzhou, Jiangsu 215009 (CN)
(74) Representative: Mewburn Ellis LLP
(86) International application number: PCT/CN2019/114113
(87) International publication number: WO 2021/035929

(56) References cited:
- EP-A1- 2 371 251
- EP-A2- 2 997 866
- CN-A- 105 662 127
- CN-A- 105 996 827
- CN-A- 108 567 304
- CN-A- 108 567 304
- CN-B- 105 662 127
- CN-U- 205 041 278
- CN-Y- 201 139 425
- JP-B2- 4 526 155

## Description

### TECHNICAL FIELD

The invention relates to a technical field of household appliance, and more particularly to a food preparation device.

### BACKGROUND

A food preparation device is a household appliance that integrates functions of preparing soy milk, grinding dry powder, squeezing juice, mincing meat, shaving ice, and so on. Moreover, the food preparation device is the household appliance used to prepare various kinds of food such as juice, soy milk, jam, dry powder, shaved ice, minced meat and so on, and is a product that is multi-functionalized from a juicing machine.

Safety performance is vital to the household appliances such as the food preparation device. At present, the food preparation device commercially available generally adopt a split structure, including a body and a detachable container. When the food preparation device is in operation, a motor in the body rotates at a high speed and drives a knife or a stirring member in the container to rotate so as to complete food preparation. At this time, the container needs to be locked on the body to avoid a safety accident caused by removal of the container during operation of the food preparation device. In the prior art, a locking member is provided in the body, and the locking member slides in a horizontal direction toward an inside of the body to cooperate with the container, so as to lock the container and the body together. Although this structure can improve the safety performance of the food preparation device, the locking member occupies a larger space, which makes a size of the body larger.

Therefore, there is a need for a food preparation device that can lock the container and the body together and can reduce the size of the body.

EP2371251A describes an electromotive operated food processor which comprising an agitator vessel which is sealed by a cover. A sealing is arranged between the cover and an opening edge of the agitator vessel, where the cover is locked by one or multiple moving bolt elements. The bolt elements are moved hydraulically or pneumatically or mechanically. EP2371251A is also related to a preparation container for boiling, cooking or steaming of food.

### SUMMARY

It is an objective of the present invention to provide a food preparation device in which a container and a body can be locked together, and a size of the body is small.

To achieve this objective, the subject matter of claim 1 is provided. The dependent claims describe optional embodiments of the invention.

A food preparation device is provided, which includes a body and a container assembly. The food preparation device further includes a drive assembly and a first locking member capable of rotating along a circumferential direction of the body; the drive assembly is configured to drive the first locking member to move to a locked position or an unlocked position.

When the first locking member is in the locked position, the first locking member locks the container assembly on the body. When the first locking member is in the unlocked position, the container assembly can be separated from the body.

The container assembly is mounted vertically onto the body; the container assembly is provided with a convex limiting portion on its side wall, and the first locking member is provided with an abutting portion; and the drive assembly is capable of driving the abutting portion to extend into or out of an upper part of the limiting portion during the rotation of the first locking member.

The body is provided with a mounting groove for accommodating a bottom of the container assembly, and an inner side of the mounting groove is provided with a groove capable of accommodating the limiting portion; and the abutting portion is capable of extending into or out of the groove along the circumferential direction of the body.

The drive assembly includes a connecting member, and the connecting member is connected with the first locking member with one end; and a driving member arranged in the body, and the driving member is configured to drive the connecting member to move.

The food preparation device further includes: a detection mechanism configured to detect whether the first locking member is moved to a designated position to control starting or stopping of the drive assembly.

The detection mechanism includes: a first sensing member configured to be capable of being triggered by the first locking member in the locked position; and a third sensing member configured to be capable of being triggered by the first locking member in the unlocked position.

The food preparation device further includes: a detection mechanism configured to detect a mounting state of the container assembly and the body, and control working of the drive assembly according to a detection result.

The detection mechanism includes a second sensing member. The container assembly is provided with a triggering member. When the container assembly is placed on the body, the triggering member triggers the second sensing member to make the drive assembly drive the first locking member to move to the locked position.

The container assembly includes a main body and a cover being rotatably matched with the main body. When the cover and the main body rotate to a closed position, the triggering member is capable of triggering the second sensing member.

The triggering member is slidably connected to the body and has a reset function.

The cover is rotatably matched with the main body, a first inclined surface is provided on the cover, and a second inclined surface is provided on the triggering member.

When the cover rotates in a screwing-tightening direction relative to the main body, the first inclined surface slides along the second inclined surface and pushes the triggering member to slide, so that the triggering member is capable of triggering the second sensing member.

When the cover rotates in a screwing-loosening direction relative to the main body, the first inclined surface and the second inclined surface are gradually separated from each other, and the triggering member is reset.

When the container assembly is locked with the body, the cover is configured to be locked with the main body.

The container assembly is movably connected with a second locking member, and when the first locking member moves to the locked position, the first locking member drives the second locking member to move to lock the cover.

The second locking member is slidably connected to the main body and has a reset function, and when the second locking member is reset, the cover is unlocked from the main body.

The cover is rotatably matched with the main body, a block is provided at a bottom of the cover, and the first locking member drives the second locking member to extend into the bottom of the cover and abut the block to prevent the cover from rotating in a screwing-loosening direction relative to the main body.

A third inclined surface is provided on the first locking member, and when the first locking member moves to the locked position, the second locking member slides along the third inclined surface.

### Beneficial Effects

The present invention provides a food preparation device. With regard to the food preparation device, after the container assembly is mounted on the body, a user can control the drive assembly by inputting an instruction in a instruction input area. The drive assembly can drive the first locking member in the body to move to cause the first locking member to be matched with the limiting portion, by which locking and unlocking of the container assembly and the body will be realized with simple operation and safety performance of the food preparation device is good. The first locking member can lock the container assembly and the body together through rotating along the circumferential direction of the body, and thus a moving space required by the locking member is small, which is beneficial to reducing a size of the body.

### BRIEF DESCRIPTION OF THE DRAWINGS

FIG. 1 is a schematic structural diagram of a food preparation device provided in Embodiment 1 of the present invention.
FIG. 2 is a schematic structural diagram of the food preparation device provided in Embodiment 1 of the present invention, with a steamer assembly unassembled.
FIG. 3 is a front view of the food preparation device shown in Embodiment 1 of the present invention, with a steamer assembly unassembled.
FIG. 4 is a rear view of a container assembly provided in Embodiment 1 of the present invention.
FIG. 5 is a schematic structural diagram of a tray provided in Embodiment 1 of the present invention.
FIG. 6 is a schematic structural diagram of a body provided in Embodiment 1 of the present invention, with the container assembly locked.
FIG. 7 is an enlarged view of area A in FIG. 6.
FIG. 8 is a schematic diagram of a structure of an upper casing and a supporting block provided in Embodiment 1 of the present invention.
FIG. 9 is a front view of the container assembly provided in Embodiment 1 of the present invention, with a cover and a main body normally closed.
FIG. 10 is a schematic diagram of a structure of the container assembly and a part of a detection mechanism provided in Embodiment 1 of the present invention.
FIG. 11 is a structural diagram of a part of a body provided in Embodiment 1 of the present invention, with a first locking member being in an unlocked position.
FIG. 12 is a structural diagram of a part of a body provided in Embodiment 1 of the present invention, with a first locking member being in a locked position.
FIG. 13 is a front view of the container assembly provided in Embodiment 2 of the present invention, with a cover and a main body of the container assembly being in an abnormally closed state.
FIG. 14 is a schematic structural diagram of the container assembly provided in Embodiment 2 of the present invention, with a cover unassembled.
FIG. 15 is a front view of the container assembly provided in Embodiment 2 of the present invention, with a cover and a main body being in an abnormally closed state and without assembled with a handle.
FIG. 16 is a front view of the container assembly provided in Embodiment 2 of the present invention, with a cover and a main body being in a normal closed state and without assembled with a handle.
FIG. 17 is a front view of the container assembly provided in Embodiment 3 of the present invention, with the cover and the main body of the container assembly normally closed.
FIG. 18 is a schematic structural diagram of a body provided in Embodiment 3 of the present invention, with the container assembly locked.
FIG. 19 is an enlarged view of area B in FIG. 18.
FIG. 20 is a schematic structural diagram of a first locking member provided in Embodiment 3 of the present invention.
FIG. 21 is a schematic structural diagram of a part of the container assembly provided in Embodiment 3 of the present invention.

1, body; 11, upper casing; 12, lower casing; 14, tray; 141, groove; 1411, stepped surface; 142, bottom plate; 143, inner plate; 144, outer plate; 15, supporting block;
2, container assembly; 21, cover; 211, first inclined surface; 212, block; 22, container; 23, handle; 231, notch; 24, base; 241, limiting portion; 242, protrusion; 25, measuring cup; 26, triggering member; 261, second inclined surface; 27, second reset member;
3, steamer assembly;
4, first locking member; 41, abutting portion; 42, third inclined surface;
5, drive assembly; 51, mounting frame; 52, connecting member;
61, second locking member; 62, third reset member;
71, adapter; 72, second sensing member; 73, first reset member; 74, second bracket; 75, first sensing member; 76, first bracket; 77, third sensing member.

### DETAILED DESCRIPTION OF THE EMBODIMENTS

The embodiments of the present disclosure will be described in detail below. Examples of the embodiments are shown in the accompanying drawings in which the same or similar reference signs indicate the same or similar elements or elements having the same or similar functions. The embodiments described below with reference to the accompanying drawings are exemplary, and are intended to explain the present disclosure, but should not be construed as limiting the present disclosure.

In the description of the present disclosure, it should be illustrated that terms indicating orientations or position relationships such as "center", "upper", "lower", "left", "right", "vertical", "horizontal", "inner", "outer", and so on are based on the orientations or position relationships shown in the accompanying drawings, which are used only to facilitate the description of the present disclosure and simplify the description, rather than indicating or implying that the device or element(s) referred to needs to have a specific orientation, be constructed and operated in a specific orientation, and thus the terms are not understood as limiting the present disclosure. Further, the terms "first", "second" are merely illustrative, and are not intended to indicate or imply the importance of the corresponding elements or the number of the technical features. The terms "first position" and "second position" are two different positions.

In the present disclosure, unless otherwise expressly specified and defined, the terms "mounted", "coupled", "connected" and "fixed" should be interpreted broadly. For example, the connection may be a fixed connection or a detachable connection. The connection may also be a mechanical connection or an electrical connection. Furthermore, the connection may be a direct connection or an indirect connection via an intermedium, an internal connection between the two components or an interaction between the two components. For those of ordinary skill in the art, the specific meanings of the above terms in the present disclosure can be understood according to specific circumstances.

In the present disclosure, unless otherwise expressly specified and defined, that a first feature is "on" or "under" a second feature may include the first feature directly contacts the second feature, or may include the first feature does not directly contact the second feature but through other features therebetween. Moreover, that the first feature is "over" or "above" the second feature includes the first feature is directly above and obliquely above the second feature, or simply means that a level height of the first feature is higher than that of the second feature. That the first feature is "below" the second feature includes the first feature directly below and obliquely below the second feature, or simply means that the level height of the first feature is less than that of the second feature.

The technical solutions of the present invention will be further described below in conjunction with the drawings and specific implementations.

### Embodiment 1

This embodiment provides a food preparation device, which can be used to prepare many kinds of food such as fruit juice, soy milk, jam, dry powder, shaved ice, minced meat and so on.

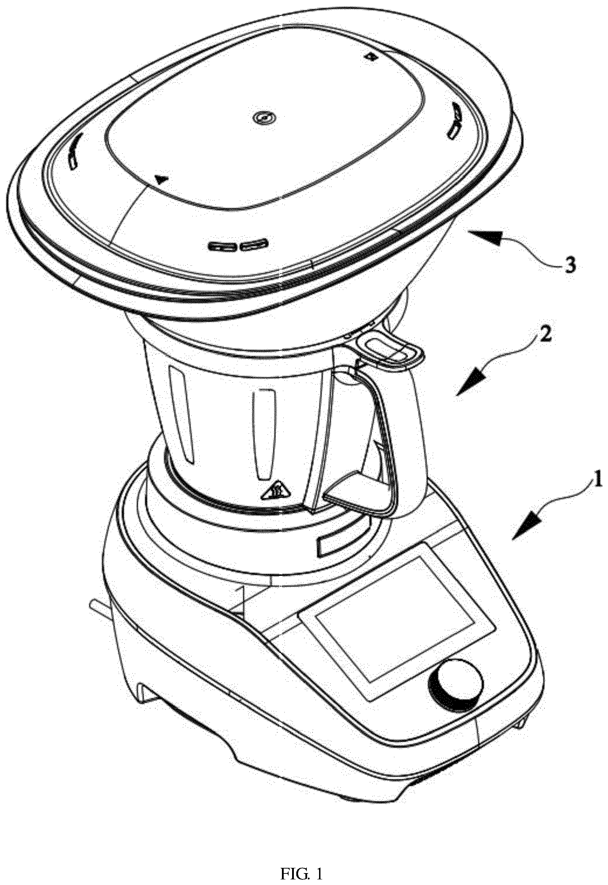

As shown in FIG. 1, the food preparation device includes a body 1, a container assembly 2 and a steamer assembly 3. The body 1 serves as a carrier of the container assembly 2 and the steamer assembly 3, and contains functional components such as a power system, a connection system, and a control system. The container assembly 2 can be mounted on the body 1, and a knife assembly and a heating assembly are provided in the container assembly 2. The knife assembly is used for further processing of food materials, and the heating assembly is used for heating the container assembly 2. It should be noted that, as an auxiliary device, the steamer assembly 3 is optional. The steamer assembly 3 can be detachably connected to the container assembly 2. When the steamer assembly 3 is used, water contained in the container assembly 2 is heated by the heating component in the container assembly 2, and steam generated will enter the steamer assembly 3.

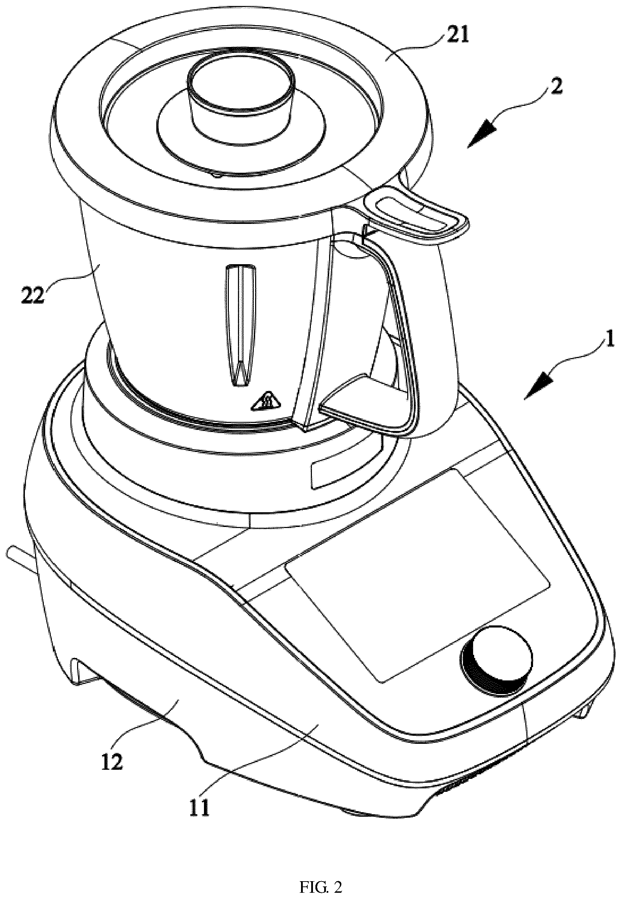

In order to improve the safety performance of the food preparation device, as shown in FIG. 2, when the container assembly 2 is placed on the body 1, and when a locking button is pressed, the container assembly 2 and the body 1 will be in a locked state to prevent the container assembly 2 from being separated from the body 1. When the container assembly 2 needs to be removed, an unlocking button is pressed, and the container assembly 2 and the body 1 can be unlocked, so that the container assembly 2 can be removed.

In this embodiment, locking and unlocking of the container assembly 2 and the body 1 can be achieved by user's controlling the control system with simple operation, which is beneficial to improving using experience. Specifically, the control system includes an instruction input area provided on the body 1 for the user to input a control instruction. Optionally, the instruction input area can be a touch screen, a knob or a button. When the user needs to lock or remove the container assembly 2, the user can input a locking instruction or an unlocking instruction at the instruction input area. The control system will control the drive assembly 5 to operate according to the instruction to move the first locking member 4 to the locked position or the unlocked position, after receiving the instruction.

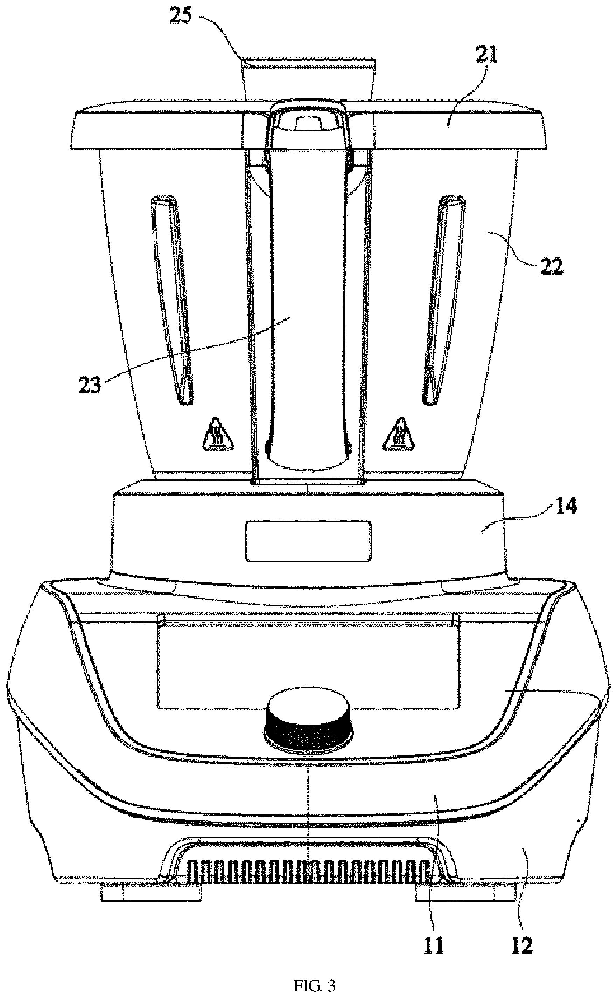

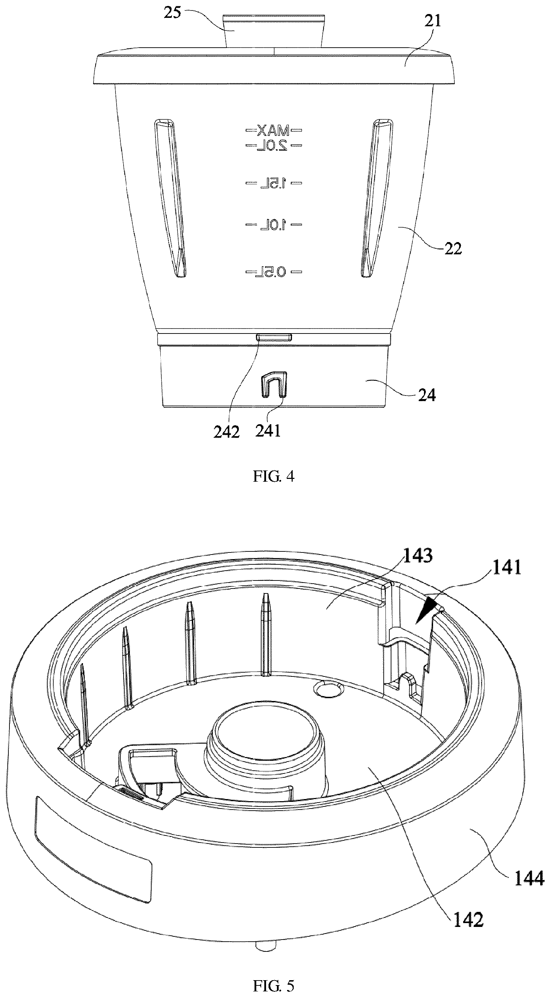

Specifically, as shown in FIGS. 3 and 4, the container assembly 2 includes a cover 21 and a main body, and the main body includes a container 22, a handle 23 and a base 24. The cover 21 can be buckled on a top of the container 22, and the handle 23 is arranged on a side of the container 22, so that the user can move the container assembly 2 conveniently by holding the handle 23. The cover 21 is also provided with a measuring cup 25, and the measuring cup 25 can be detachably connected with the cover 21. When the measuring cup 25 is fixed on the cover 21, the measuring cup 25 can be used as a handle of cover 21 to facilitate the user to open or cover the cover 21. In addition, the measuring cup 25, after being removed from the cover 21, can be used to measure an appropriate amount of food material by a user conveniently. The container 22 is arranged on the base 24, and the base 24 is provided with a structure that cooperates with the body 1 so that the functional components in the body 1 can process the food in the container 22.

The body 1 includes an upper casing 11 and a lower casing 12. After the upper casing 11 and the lower casing 12 are fixed together, a mounting cavity for accommodating the power system and the control system is formed therebetween. A tray 14 is provided on the upper casing 11, and the tray 14 is provided with a mounting groove for carrying the container assembly 2. When the container assembly 2 is arranged on the body 1, a lower end of the container assembly 2 is inserted into the tray 14, which is beneficial to improving the stability of the container assembly 2.

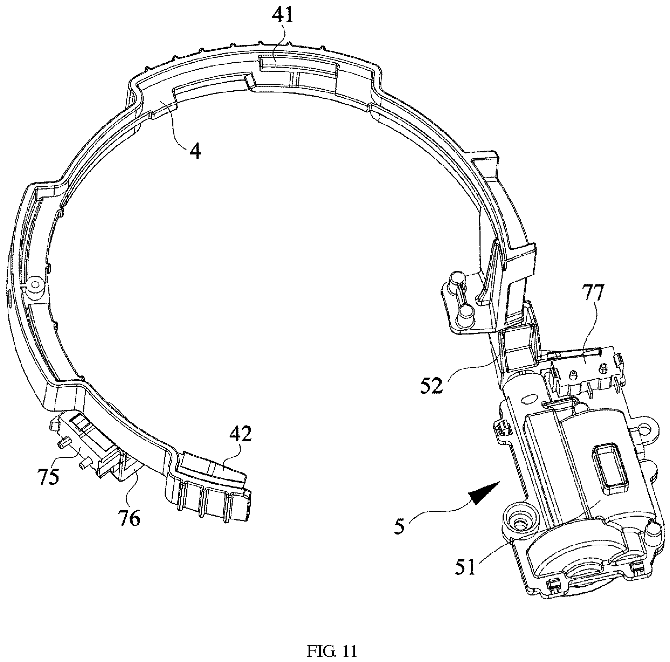

As shown in FIG. 4, the container assembly 2 is provided with a limiting portion 241. The body 1 is movably connected with a first locking member 4 (see FIG. 11), and a drive assembly 5 is arranged in the body 1. The drive assembly 5 can drive the first locking member 4 to switch between a locked position and an unlocked position. When the container assembly 2 is placed on the body 1, the drive assembly 5 can drive the first locking member 4 to move to the locked position where the first locking member 4 can cooperate with the limiting portion 241 to prevent the container assembly 2 from being separated from the body 1, so that the purpose of locking the container assembly 2 and the body 1 is achieved. When the container assembly 2 needs to be removed, the drive assembly 5 drives the first locking member 4 to move to the unlocked position, the limiting portion 241 is disengaged from the first locking member 4, and the container assembly 2 is unlocked from the body 1, so that the container assembly 2 can be removed.

In this embodiment, the limiting portion 241 is provided on a side wall of the base 24 and protruded therefrom, and the first locking member 4 is movably connected with the tray 14. When the container assembly 2 is placed on the body 1, the base 24 extends into the tray 14 so as to cooperate with the first locking member 4. Optionally, the container assembly 2 can be mounted vertically onto the tray 14, and the first locking member 4 can move to the upper side of the limiting portion 241 to prevent the container assembly 2 from being pulled out of the tray 14, thereby realizing locking of the container assembly 2 and the body 1. The locking realized by moving the first locking member 4 to the upper side of the limiting portion 241 makes the structure simple and the locking effect reliable.

In order to prevent the container assembly 2 on the body 1 from shaking, when the container assembly 2 is locked with the body 1, the first locking member 4 can abut on the upper side of the limiting portion 241 to further limit the container assembly 2.

In other embodiments, the container assembly 2 can also be assembled into the tray 14 in other directions. For example, an opening is provided on a side of the tray 14, and the container assembly 2 is horizontally assembled into the tray 14 through the opening, as long as the first locking member 4 can be moved to a moving trajectory of the container assembly 2 when it is removed.

In other embodiments, the locking can also be achieved by other ways such as engaging the limiting portion 241 with the first locking member 4.

In order to further improve the limiting effect of the tray 14 on the container assembly 2, when the container assembly 2 is assembled into the tray 14, an outer side wall of the container assembly 2 abuts an inner side wall of the mounting groove, that is, the shape and size of an inner space of the mounting groove can be the same as those of the base of the container assembly 2, which is beneficial to improving the limiting effect of the container assembly 2.

In order to avoid the limiting portion 241 from interfering with the cooperation between the container assembly 2 and the tray 14, as shown in FIG. 5, a groove 141 capable of accommodating the limiting portion 241 is provided in an inner side the mounting groove. When the container assembly 2 is mounted from top to bottom, the limiting portion 241 slides down along the groove 141, so that interference between the limiting portion 241 and the tray 14 can be avoided. After the container assembly 2 is assembled into the tray 14, the drive assembly 5 drives the first locking member 4 to the locked position, so that the first locking member 4 extends into the groove 141 and abuts against a top surface of the limiting portion 241 to achieve locking.

In order to further ensure the locking effect between the container assembly 2 and the body 1, as shown in FIG. 4, the container assembly 2 is further provided with a protrusion 242 which is located above the limiting portion 241. After the container assembly 2 is placed in the body 1, the container assembly 2 drives the first locking member 4 to move, so that the abutting portion 41 slides into the groove 141 and is located between the protrusion 242 and the abutting portion 241, thereby further improving the locking effect of the container assembly 2 and body 1. In addition, by providing the protrusion 242, the opening at the top of the groove 141 can be shaded, so that food residues or other sundries can be prevented from falling into the groove 141, and the appearance of the tray 14 become more beautiful.

In order to reduce the space required for movement of the first locking member 4 relative to the body 1, in this embodiment, the first locking member 4 can rotate along the circumferential direction of the tray 14 and extend into or out of the groove 141. The first locking member 4 rotates along the circumferential direction of the tray 14, which can reduce the space required for the movement of the first locking member 4 and be beneficial to making the structure of the food preparation device more compact, and thus a miniaturized design can be realized.

Specifically, the tray 14 includes a bottom plate 142 and a side plate connected to the bottom plate 142, and the side plate and the bottom plate 142 are enclosed to form a mounting groove used for accommodating the base of the container assembly 2. The side plate is a double-layer structure and may be formed by a process such as flanging, and the cross-sectional shape of the side plate is in a U-shape, so that the locking member 4 can be arranged in the double-layer structure of the side plate. The side plate includes an inner plate 143 and an outer plate 144 formed by bending the inner plate 143 outward. A cavity is formed between the inner plate 143 and the outer plate 144, and a groove 141 is arranged on the inner plate 143 and communicates with the cavity. The first locking member 4 is slidably arranged in the cavity. According to the structure configuration of the side plate, the first locking member 4 can be hided and the tray 14 can be more beautiful as an appearance member. The first locking member 4 slides along the circumferential direction of the cavity, which requires small space and has a limiting effect on the first locking member 4, and thus a space required for the first locking member 4 to lock the container assembly 2 and the body 1 can be beneficially reduced. In this embodiment, the tray 14 is integrally formed, which is convenient for processing and is simple in structure.

Optionally, the first locking member 4 may have an annular structure, so that the stability of the first locking member 4 in the annular cavity is better.

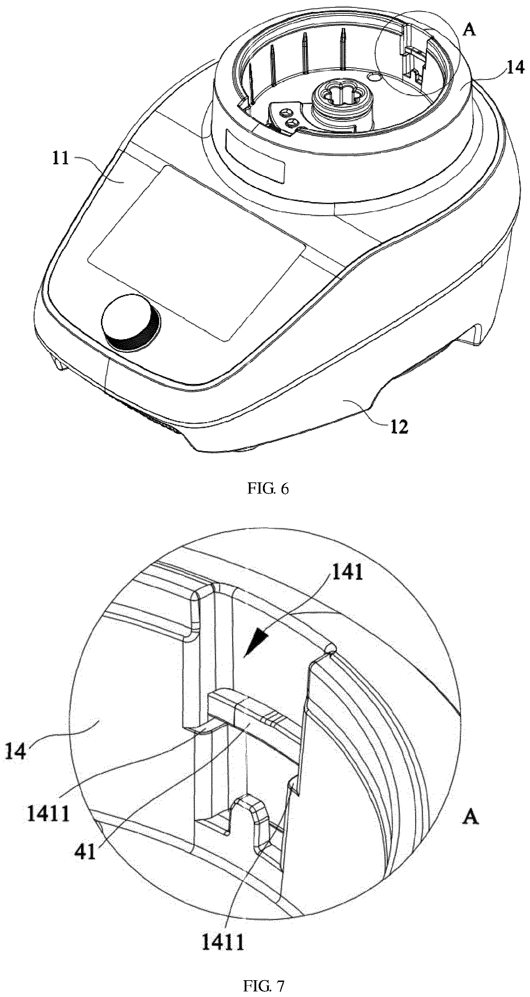

Optionally, as shown in FIGS. 6 and 7, the abutting portion 41 is provided on the inner side of the first locking member 4. When the drive assembly 5 drives the first locking member 4 to move to the locked position, the abutting portion 41 on the first locking member 4 slides into the groove 141, and the limiting portion 241 is located below the abutting portion 41, which will realize the locking of the container assembly 2 and the body 1.

Optionally, a stepped surface 1411 is provided in the groove 141. When sliding into the groove 141, the abutting portion 41 overlaps on the stepped surface 1411 to improve the positioning effect of the abutting portion 41 and the groove 141 to the container assembly 2.

In order to further improve the locking effect between the container assembly 2 and the body 1, a plurality of limiting portions 241 may be provided on the container assembly 2. After the container assembly 2 is assembled in the body 1, movement of the first locking member 4 makes the first locking member 4 abut on the upper side of each limiting portion 241 and the number of force points between the limiting portion 241 and the first locking member 4 increased, thereby improving the locking effect of the container assembly 2. The number of the abutting portions 41 is the same as that of the limiting portions 241 on the container assembly 2, so that the locking effect of the container assembly 2 is improved.

Optionally, the protrusion 242 is provided above one of the abutting portions 41, which can form a foolproof structure, so that the container assembly 2 is mounted on the body 1 at a specified angle, thereby improving safety performance.

In this embodiment, the container assembly 2 is provided with two limiting portions 241 which are respectively provided on both sides of the base. Two abutting portions 41 are provided on the first locking member 4, and each abutting portion 41 is correspondingly matched with a limiting portion 241 on the container assembly 2. By providing a limiting portion 241 on each of the opposite sides of the container assembly 2, the force exerted on the container assembly 2 in a locked state can be more uniform and the locking effect is better.

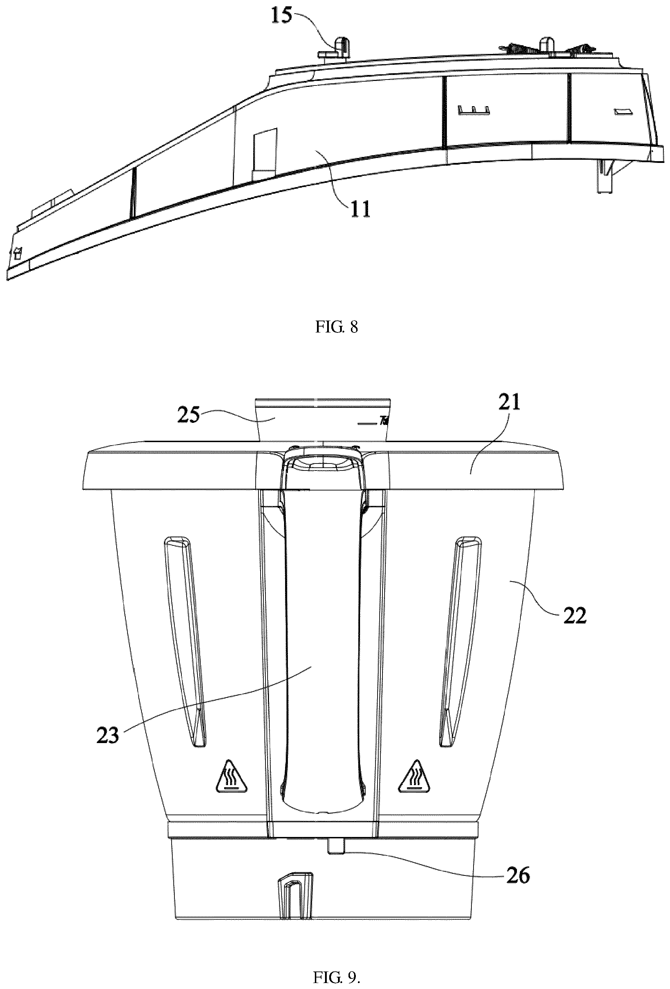

In order to prevent the first locking member 4 from tilting in the cavity, causing the abutting portion 41 to fail to accurately cooperate with the limiting portion 241, as shown in FIG. 8, a plurality of supporting blocks 15 are also provided on the upper casing 11. The supporting blocks 15 each supports the first locking member 4, so that the first locking member 4 is kept to slide horizontally. In order to reduce the wear between the supporting block 15 and the first locking member 4, the supporting surface of the supporting block 15 may be a smooth arc surface to reduce the contact area between the supporting surface and the first locking member 4, thereby reducing friction.

In this embodiment, the food preparation device further includes a detection mechanism which can detect whether the container assembly 2 and the body 1 are assembled in place, so as to control the operation of the drive assembly 5 according to the assembled status of the container assembly 2 and the body 1. Specifically, when the detection mechanism detects that the container assembly 2 and the body 1 are assembled in place, and when the user inputs an instruction to lock the body 1 and the container assembly 2 together through the instruction input area on the control system, the drive assembly 5 drives the first locking member 4 to move to the locked position. When the detection mechanism detects that the container assembly 2 and the body 1 have not been assembled in place, and when the user inputs an instruction to lock the body 1 and the container assembly 2 together through the instruction input area on the control system, the drive assembly 5 will not be started to operate, and the food preparation device can remind the user to check the assembly status of the container assembly 2 and the body 1 in time by means of alarm voice or text display, etc,.

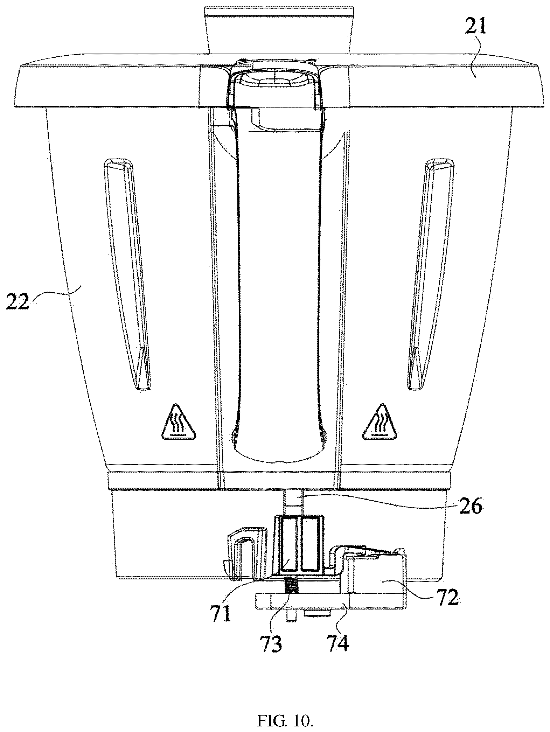

As shown in FIG. 9, the container assembly 2 is provided with a triggering member 26. As shown in FIG. 10, the detection mechanism includes a second sensing member 72. When the container assembly 2 is assembled on the body 1 in place, the triggering member 26 can trigger the second sensing member 72. After the second sensing member 72 detects that the container assembly 2 is assembled on the body 1 in place and the user inputs an instruction to lock the body 1 and the container assembly 2 together, the drive assembly 5 drives the first locking member 4 to move to the locked position to complete the locking of the container assembly 2. In other embodiments, the locking of the container assembly 2 can also be automatically triggered by the detection mechanism. For example, when the detection mechanism detects that the container assembly 2 is mounted on the body 1 and the cover 21 is assembled in place, the detection mechanism sends a detection signal to the control system. The control system will control the action of the drive assembly 5 according to the detection signal to move the first locking member 4 to the locked position without a user's operation, and thus the operation is more convenient and reliable, and the safety performance is good.

In order to facilitate the cooperation between the triggering member 26 and the second sensing member 72, the detection mechanism may also include a resettable adapter 71. The adapter 71 can be slidably arranged in the cavity of the tray 14. One end of the adapter 71 penetrates through the tray 14 and can abut against the triggering member 26, and the other end can cooperate with the second sensing member 72 under the drive of the triggering member 26. When the triggering member 26 does not abut the adapter 71, the adapter 71 can automatically reset and be disengaged from the second sensing member 72, and thus the second sensing member 72 is not triggered, so that the drive assembly 5 will not drive the first locking member 4 to move to the locked position.

The second sensing member 72 and the adapter 71 can be arranged in the cavity of the tray 14. By reasonably using the space between the inner plate 143 and the outer plate 144 in the tray 14, the structure of the food preparation device will be more compact.

Specifically, the detection mechanism also includes a second bracket 74, and both the adapter 71 and the second sensing member 72 can be arranged on the second bracket 74. A first reset member 73 is provided between the adapter 71 and the second bracket 74. Two ends of the first reset member 73 abut on the second bracket 74 and the adapter 71 respectively to drive the adapter 71 to extend out of the tray 14 so as to cooperate with the triggering member 26. Optionally, the first reset member 73 may be a spring. A contact end is also provided on the adaptor 71. During the adapter 71 is sliding upward and downward, and the adaptor 71 can drive the contact end to abut against the second sensing member 72 or disengage from the second sensing member 72.

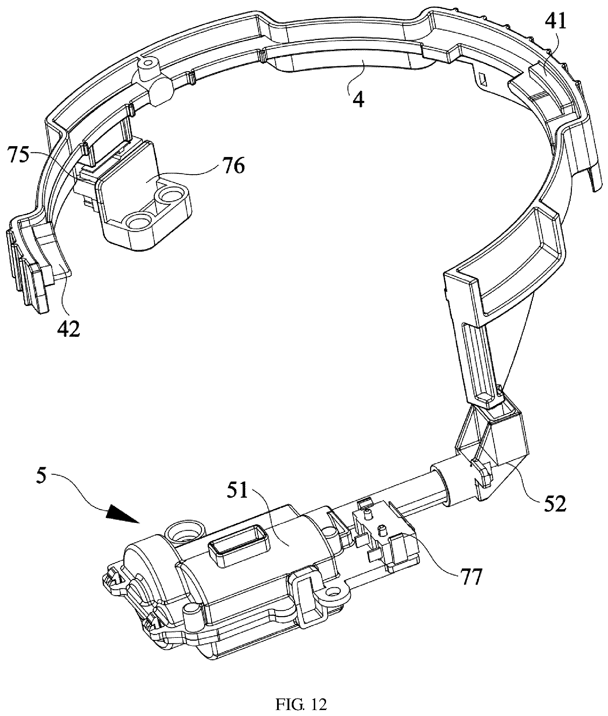

As shown in FIGS. 11 and 12, the drive assembly 5 includes a mounting frame 51, a driving member and a connecting member 52. The driving member is arranged in the mounting frame 51. One end of the connecting member 52 is connected to the first locking member 4, and the other end is connected to the driving member. The driving member causes the first locking member 4 to move by driving the connecting member 52 to move. Optionally, the driving member may be a motor, and the motor is connected to the connecting member 52 through a transmission mechanism. The transmission mechanism converts the rotation movement of the motor into the sliding movement of the connecting member 52, thereby driving the first locking member 4 to slide relative to the body 1.

Optionally, the transmission mechanism may include a driving gear connected with the motor and a driven gear meshing with the driving gear. The connecting member 52 may be a screw and be penetrated through the driven gear. The screw is threadedly connected with the driven gear. When rotating, the rotor drives the driving gear to rotate. The driven gear is driven to rotate by the meshing of the driving gear and the driven gear, thereby the screw is driven to move linearly. In other embodiments, the transmission mechanism may be also other types, such as a gear-rack mechanism.

When the container assembly 2 needs to be removed, the user can input an unlocking instruction at the instruction input area, and the drive assembly 5 will drive the first locking member 4 to move to the unlocked position as shown in FIG. 11. At this time, the abutting portion 41 is located outside the groove 141. The container assembly 2 can be removed from the body 1 conveniently. When the container assembly 2 is assembled in the body 1, the drive assembly 5 drives the first locking member 4 to move to the locked position shown in FIG. 12. At this time, the abutting portion 41 slides into the groove 141 to cooperate with the limiting portion 241, and thus the container assembly 2 is locked on the body 1.

Optionally, in order to ensure the movement accuracy of the first locking member 4 driven by the drive assembly 5, the detection mechanism can also detect the position of the first locking member 4 so as to control the start and stop of the drive assembly 5, so that the first locking member 4 moves to the unlocked position or the locked position accurately.

Specifically, the detection mechanism further includes a first sensing member 75, a first bracket 76 and a third sensing member 77. The first sensing member 75 is mounted on the first bracket 76, and the third sensing member 77 is mounted on the mounting frame 51.

When the container assembly 2 is locked, the drive assembly 5 drives the first locking member 4 to move. When the first locking member 4 moves to the locked position, as shown in FIG. 12, the first locking member 4 can trigger the first sensing member 75, and then the drive assembly 5 is controlled to stop, so as to stabilize the first locking member 4 at the locked position. When the container assembly 2 needs to be unlocked, as shown in FIG. 11, the drive assembly 5 drives the first locking member 4 to move to the unlocked position, so that the first locking member 4 can trigger the third sensing member 77, and then the drive assembly 5 is controlled to stop, so as to stabilize the first locking member 4 at the unlocked position. By providing the first sensing member 75 and the third sensing member 77, the position accuracy of the first locking member 4 can be ensured, thereby ensuring the locking and unlocking effect of the container assembly 2.

Optionally, the first sensing member 75, the second sensing member 72, and the third sensing member 77 may all be micro switches, which are triggered by pressing a spring sheet of the micro switch.

In other embodiments, the first sensing member 75, the second sensing member 72, and the third sensing member 77 may also be other types such as contact sensors or proximity sensors to implement the above functions.

Optionally, the control system of the food preparation device may be electrically connected to the detection mechanism. When the spring sheet of the micro switch is triggered, the micro switch obtains the position information of the first locking member 4 and the mounting state of the container assembly 2 on the body 1, and transmits this information to the control system. The control system controls the drive assembly 5 to start or stop according to the received information.

### Embodiment 2

This embodiment provides a food preparation device. The difference of the food preparation device in embodiment 2 from that in embodiment 1 is that the detection mechanism can detect whether the cover 21 and the container 22 are closed in place or not, so as to avoid the cover 21 or the food materials in the container 22 from being thrown out due to the screwing-loosening of the cover 21 when the food preparation device is operating, and thus the safety performance of the food preparation device is improved.

Specifically, when the cover 21 and the container 22 in the container assembly 2 mounted on the body 1 are closed in place, the triggering member 26 can trigger the second sensing member 72 in the body 1; otherwise, the triggering member 26 cannot trigger the second sensing member 72. Thus, the sensor 72 determines whether the cover 21 and the container 22 are closed in place.

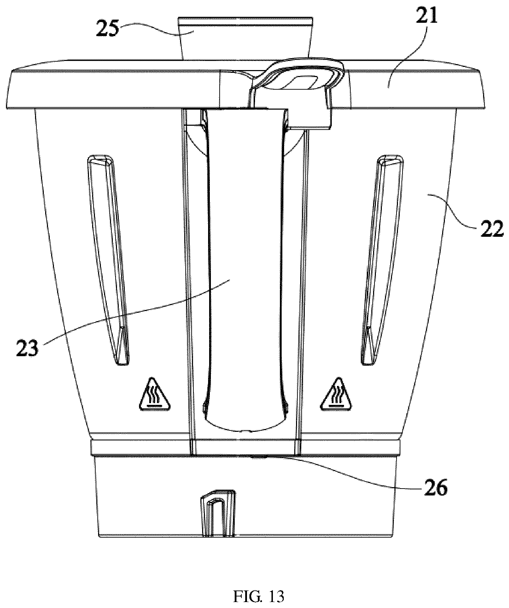

When the cover 21 and the container 22 are closed in place, the triggering member 26 extends beyond the handle 23 to a longer length, and the triggering member 26 can trigger the second sensing member 72 on the body 1 to generate the information that the cover 21 has been mounted on the container 22 in place. As shown in FIG. 13, when the cover 21 and the container 22 are not closed in place, the triggering member 26 extends beyond the handle 23 to a short length, and the triggering member 26 cannot trigger the second sensing member 72 on the body 1, such that the cover 21 is determined to be abnormally covered on the container 22.

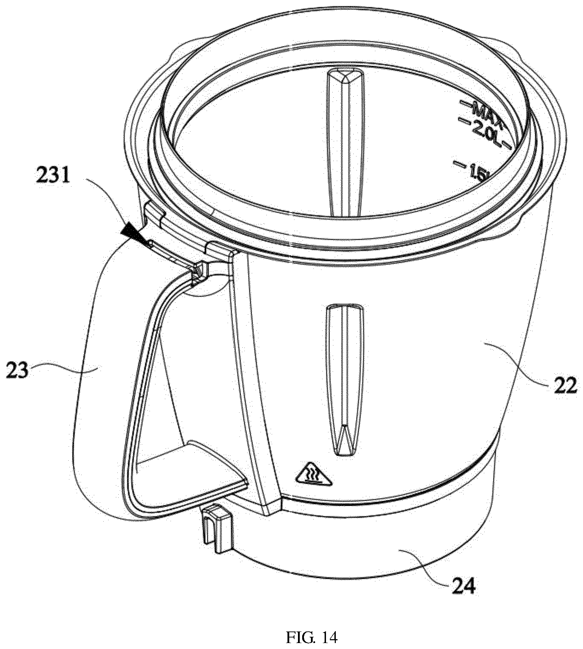

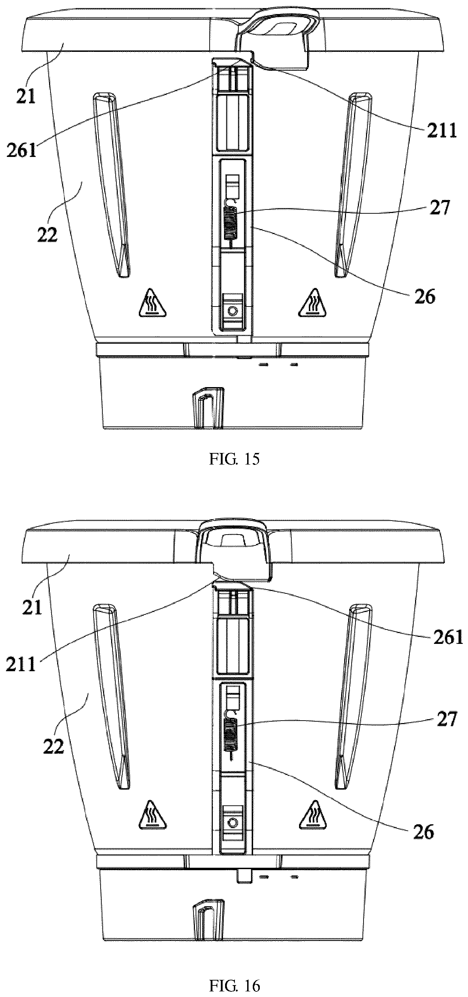

In order to enable the triggering member 26 to move with the cooperating state of the cover 21 and the container 22, as shown in FIG. 14, the triggering member 26 is provided inside the handle 23, and the handle 23 is provided with a notch 231. As shown in FIGS. 15 and 16, the cover 21 is provided with a first inclined surface 211, and the triggering member 26 is resetably arranged on the container 22. The triggering member 26 is provided with a second inclined surface 261. The cover 21 covers the container 22 in a rotating manner. When the cover 21 is cover on the container 22 in a rotating manner, the first inclined surface 211 on the cover 21 can be slidably matched with the second inclined surface 261 on the triggering member 26 through the notch 231, so as to drive the triggering member 26 to move.

As shown in FIG. 15, when the cover 21 and the container 22 are abnormally closed, the triggering member 26 is retracted into the handle 23 under the action of the second reset member 27. As shown in FIG. 16, during a process that the cover 21 rotates relative to the container 22 to cover the container, the first inclined surface 211 on the cover 21 can be slidably matched with the second inclined surface 261 on the triggering member 26 and push the triggering member 26 to slide downwards, so that the lower end of the triggering member 26 gradually extends out of the handle 23 so as to abut against the adapter 71.

### Embodiment 3

In order to prevent the user from removing the cover 21 from the container assembly 2 during the operation of the food preparation device, which may cause a safety accident, in this embodiment, a food preparation device is provided. The difference of the food preparation device in embodiment 3 from those in the above embodiments is that when the container assembly 2 is locked with the body 1 together, the cover 21 can be locked with the main body together, which improves the safety performance of the food preparation device.

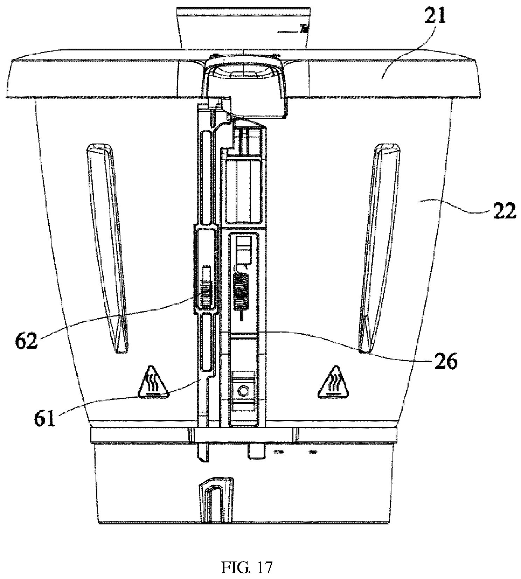

Specifically, as shown in FIG. 17, the container assembly 2 is provided with a second locking member 61 which is movable. When the first locking member 4 is moved to the locked position, the first locking member 4 can drive the second locking member 61 to move, so as to lock the cover 21 on the main body.

Optionally, the second locking member 61 can also be arranged in the handle 23. The second locking member 61 is slidably connected with the container 22 in the vertical direction and has a reset function. When the first locking member 4 is moved to the unlocked position, the second locking member 61 will automatically be reset and the locking of the cover 21 and the container 22 is released, so that the container assembly 2 can be opened. Specifically, the second locking member 61 and the container 22 are connected by a third reset member 62. Optionally, the third reset member 62 may be a spring.

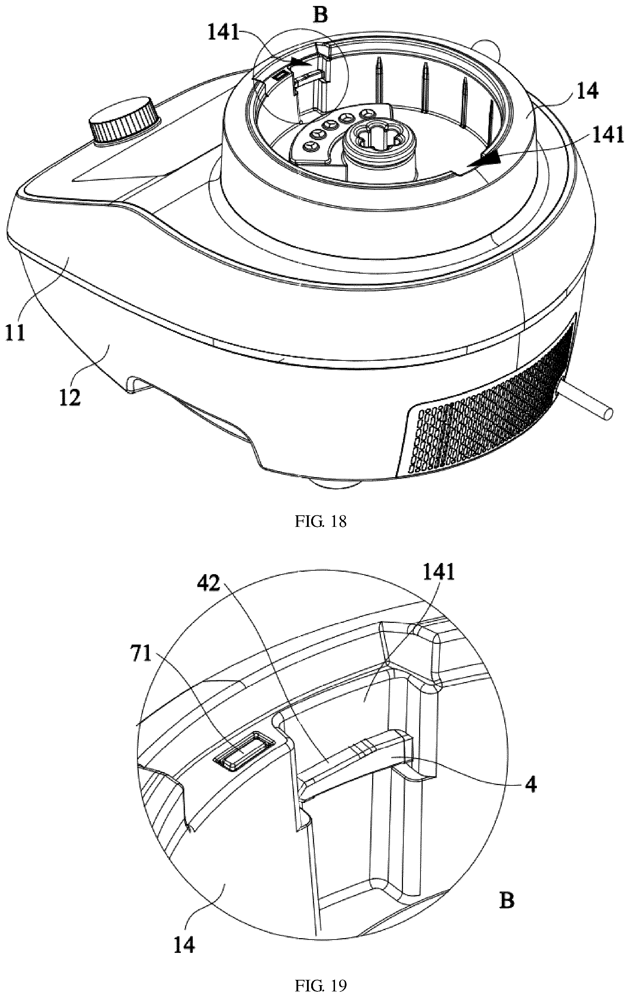

In this embodiment, the first locking member 4 can drive the second locking member 61 to move upwards so as to lock the cover 21. In order to make the first locking member 4 drive the second locking member 61, as shown in FIGS. 18-20, the first locking member 4 is provided with a third inclined surface 42 which can slidably cooperate the lower end of the second locking member 61.

When the first locking member 4 is moving to the locked position, the third inclined surface 42 gradually slides into the groove 141 and cooperates with the lower end of the second locking member 61 extending into the groove 141. The third inclined surface 42 gradually decreases in height along the direction of sliding into the groove 141, so that the second locking member 61 slides upwards when sliding along the third inclined surface 42, so that the second locking member 61 achieves the locking of the cover 21.

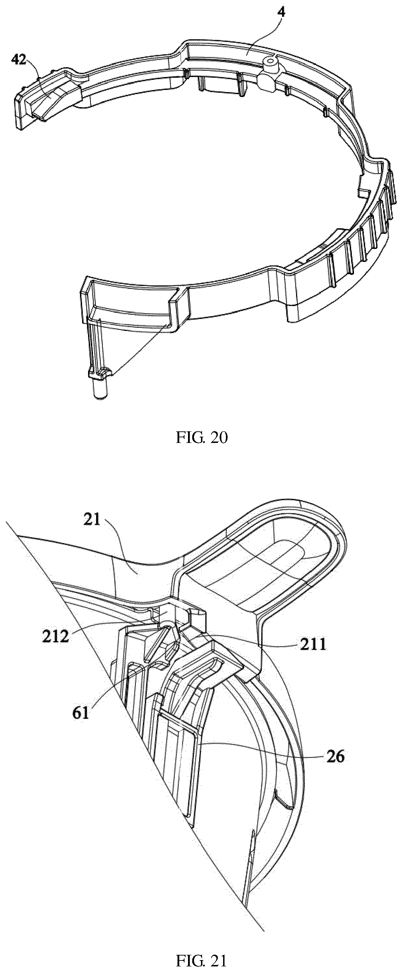

In order that the second locking member 61 is able to lock the cover 21 after being raised, as shown in FIG. 21, a block 212 is provided at the bottom of the cover 21. In the state that the cover 21 and the container 22 are turned to be tightened, and after the second locking member 61 is slid upwards, the top end of the second locking member 61 abuts against a side of the block 212 facing away from the screwing-tightening direction of the cover 21, so that the cover 21 is prevented from rotating in the screwing-loosening direction relative to the container 22, and the purpose of locking the cover 21 is achieved.

After being reset, the second locking member 61 slides down and no longer abuts against the block 212, and the locking of cover 21 and the container 22 is released.

## Claims

1. A food preparation device, comprising a body (1) and a container assembly (2), the food preparation device further comprises a drive assembly (5) and a first locking member (4) capable of rotating along a circumferential direction of the body (1), the drive assembly (5) is configured to drive the first locking member (4) to move to a locked position or an unlocked position; when the first locking member (4) is in the locked position, the first locking member (4) locks the container assembly (2) on the body (1); when the first locking member (4) is in the unlocked position, the container assembly (2) can be separated from the body (1);
in which the body (1) includes an upper casing (11) and a lower casing (12), between which casings a mounting cavity for accommodating a power system and a control system is formed, the body (1) comprises a tray (14), said tray (14) is provided on the upper casing (11), and is provided with a mounting groove for carrying the container assembly (2), whereby when the container assembly (2) is arranged on the body (1), a lower end of the container assembly (2) is inserted into the tray (14);
**characterized in that**:
said tray (14) includes a bottom plate (142) and a side plate connected to the bottom plate (142), and the side plate and the bottom plate (142) are enclosed to form the mounting groove used for accommodating the base of the container assembly (2), in which the cross-sectional shape of the side plate is preferably in a U-shape, so that the locking member (4) can be arranged in the double-layer structure of the side plate; the side plate including an inner plate (143) and an outer plate (144) with a cavity being formed between the inner plate (143) and the outer plate (144), and a groove (141) is arranged on the inner plate (143) and communicates with the cavity; and
the first locking member (4) is slidably arranged in the cavity and can slide along the circumferential direction of the cavity and can rotate along the circumferential direction of the tray (14) and extend into or out of the groove (141).

2. The food preparation device according to claim 1, wherein the container assembly (2) is mounted vertically onto the body (1); the container assembly (2) is provided with a convex limiting portion (241) on its side wall, and the first locking member (4) is provided with an abutting portion (41); and the drive assembly (5) is capable of driving the abutting portion (41) to extend into or out of an upper part of the limiting portion (241) during the rotation of the first locking member (4).

3. The food preparation device according to claim 2, wherein an inner side of the mounting groove is provided with the groove (141) which is capable of accommodating the limiting portion (241); and the abutting portion (41) is capable of extending into or out of the groove (141) along the circumferential direction of the body (1).

4. The food preparation device according to claim 1, wherein the drive assembly (5) comprises:
a connecting member (52), and the connecting member (52) is connected with the first locking member (4) with one end; and
a driving member arranged in the body (1), and the driving member is configured to drive the connecting member (52) to move.

5. The food preparation device according to any one of claims 1-4, wherein the food preparation device further comprises:
a detection mechanism configured to detect whether the first locking member (4) is moved to a designated position to control starting or stopping of the drive assembly (5);
preferably, the detection mechanism comprises:
a first sensing member (75) configured to be capable of being triggered by the first locking member (4) in the locked position; and
a third sensing member (77) configured to be capable of being triggered by the first locking member (4) in the unlocked position.

6. The food preparation device according to any one of claims 1 to 4, wherein the food preparation device further comprises:
a detection mechanism configured to detect a mounting state of the container assembly (2) and the body (1), and control working of the drive assembly (5) according to a detection result;
preferably, the detection mechanism comprises:
a second sensing member (72), wherein the container assembly (2) is provided with a triggering member (26); and when the container assembly (2) is placed on the body (1), the triggering member (26) triggers the second sensing member (72) to make the drive assembly (5) drive the first locking member (4) to move to the locked position.

7. The food preparation device according to claim 6, wherein the container assembly (2) comprises a main body and a cover (21) being rotatably matched with the main body; and when the cover (21) and the main body rotate to a closed position, the triggering member (26) is capable of triggering the second sensing member (72).

8. The food preparation device according to claim 7, wherein the triggering member (26) is slidably connected to the body and has a reset function;
preferably, the cover (21) is rotatably matched with the main body, a first inclined surface (211) is provided on the cover (21), and a second inclined surface (261) is provided on the triggering member (26);
when the cover (21) rotates in a screwing-tightening direction relative to the main body, the first inclined surface (211) slides along the second inclined surface (261) and pushes the triggering member (26) to slide, so that the triggering member (26) is capable of triggering the second sensing member (72);
when the cover (21) rotates in a screwing-loosening direction relative to the main body, the first inclined surface (211) and the second inclined surface (261) are gradually separated from each other, and the triggering member (26) is reset.

9. The food preparation device according to claim 7, wherein when the container assembly (2) is locked with the body (1), the cover (21) is configured to be locked with the main body;
preferably, the container assembly (2) is movably connected with a second locking member (61), and when the first locking member (4) moves to the locked position, the first locking member (4) drives the second locking member (61) to move to lock the cover (21);
preferably, the second locking member (61) is slidably connected to the main body and has a reset function, and when the second locking member (61) is reset, the cover (21) is unlocked from the main body.

10. The food preparation device according to claim 9, wherein the cover (21) is rotatably matched with the main body, a block (212) is provided at a bottom of the cover (21), and the first locking member (4) drives the second locking member (61) to extend into the bottom of the cover (21) and abut the block (212) to prevent the cover (21) from rotating in a screwing-loosening direction relative to the main body;
preferably, a third inclined surface (42) is provided on the first locking member (4), and when the first locking member (4) moves to the locked position, the second locking member (61) slides along the third inclined surface (42).

## Patentansprüche

1. Lebensmittelzubereitungsvorrichtung, umfassend einen Körper (1) und eine Behälteranordnung (2), wobei die Lebensmittelzubereitungsvorrichtung ferner eine Antriebsanordnung (5) und ein erstes Verriegelungselement (4), das in der Lage ist, entlang einer Umfangsrichtung des Körpers (1) zu rotieren, umfasst, wobei die Antriebsanordnung (5) dazu ausgelegt ist, das erste Verriegelungselement (4) anzutreiben, damit es sich in eine verriegelte Position oder eine nicht verriegelte Position bewegt; wobei, wenn das erste Verriegelungselement (4) in der verriegelten Position ist, das erste Verriegelungselement (4) die Behälteranordnung (2) auf dem Körper (1) verriegelt; wobei, wenn das erste Verriegelungselement (4) in der nicht verriegelten Position ist, die Behälteranordnung (2) von dem Körper (1) gelöst werden kann;
wobei der Körper (1) ein oberes Gehäuse (11) und ein unteres Gehäuse (12) umfasst, wobei zwischen den Gehäusen ein Montagehohlraum zum Aufnehmen eines Leistungssystems und eines Steuersystems ausgebildet ist, der Körper (1) eine Wanne (14) umfasst, die Wanne (14) auf dem oberen Gehäuse (11) bereitgestellt und mit einer Montagevertiefung zum Tragen der Behälteranordnung (2) bereitgestellt ist, wobei, wenn die Behälteranordnung (2) auf dem Körper (1) angeordnet ist, ein unteres Ende der Behälteranordnung (2) in die Wanne (14) eingebracht ist;
**dadurch gekennzeichnet, dass**:
die Wanne (14) eine Bodenplatte (142) und eine mit der Bodenplatte (142) verbundene Seitenplatte umfasst, und die Seitenplatte und die Bodenplatte (142) umschlossen sind, um die Montagevertiefung auszubilden, welche zum Aufnehmen der Basis der Behälteranordnung (2) verwendet wird, wobei die Querschnittsform der Seitenplatte vorzugsweise U-förmig ist, sodass das Verriegelungselement (4) in der Doppelschichtstruktur der Seitenplatte angeordnet werden kann; wobei die Seitenplatte eine Innenplatte (143) und eine Außenplatte (144) umfasst, wobei zwischen der Innenplatte (143) und der Außenplatte (144) ein Hohlraum ausgebildet ist und eine Vertiefung (141) auf der Innenplatte (143) angeordnet ist und mit dem Hohlraum kommuniziert; und
das erste Verriegelungselement (4) in dem Hohlraum verschiebbar angeordnet ist und entlang der Umfangsrichtung des Hohlraums gleiten und entlang der Umfangsrichtung der Wanne (14) rotieren und sich in die/aus der Vertiefung (141) hinein/heraus erstrecken kann.

2. Lebensmittelzubereitungsvorrichtung nach Anspruch 1, wobei die Behälteranordnung (2) vertikal auf dem Körper (1) montiert ist; wobei die Behälteranordnung (2) mit einem konvexen Begrenzungsabschnitt (241) an ihrer Seitenwand bereitgestellt ist und das erste Verriegelungselement (4) mit einem Anlageabschnitt (41) bereitgestellt ist; und die Antriebsanordnung (5) in der Lage ist, den Anlageabschnitt (41) anzutreiben, um sich während des Rotierens des ersten Verriegelungselements ( 4) in einen /aus einem oberen Teil des Begrenzungsabschnitt (241) hinein/heraus zu erstrecken.

3. Lebensmittelzubereitungsvorrichtung nach Anspruch 2, wobei eine Innenseite der Montagevertiefung mit der Vertiefung (141) bereitgestellt ist, welche in der Lage ist, den Begrenzungsabschnitt (241) aufzunehmen; und der Anlageabschnitt (41) in der Lage ist, sich entlang der Umfangsrichtung des Körpers (1) in die/aus der Vertiefung (141) hinein/heraus zu erstrecken.

4. Lebensmittelzubereitungsvorrichtung nach Anspruch 1, wobei die Antriebsanordnung (5) Folgendes umfasst:
ein Verbindungselement (52), wobei das Verbindungselement (52) mit einem Ende mit dem ersten Verriegelungselement (4) verbunden ist; und
ein Antriebselement, das in dem Körper (1) angeordnet ist, wobei das Antriebselement dazu ausgelegt ist, das Verbindungselement (52) anzutreiben, damit es sich bewegt.

5. Lebensmittelzubereitungsvorrichtung nach einem der Ansprüche 1 bis 4, wobei die Lebensmittelzubereitungsvorrichtung ferner Folgendes umfasst:
einen Detektionsmechanismus, der dazu ausgelegt ist, zu detektieren, ob das erste Verriegelungselement (4) in eine vorbestimmte Position bewegt wird, um das Starten oder Anhalten der Antriebsanordnung (5) zu steuern;
wobei der Detektionsmechanismus vorzugsweise Folgendes umfasst:
ein erstes Abfühlelement (75), das dazu ausgelegt ist, in der Lage zu sein, durch das erste Verriegelungselement (4) in der verriegelten Position ausgelöst zu werden; und
ein drittes Abfühlelement (77), das dazu ausgelegt ist, in der Lage zu sein, durch das erste Verriegelungselement (4) in der nicht verriegelten Position ausgelöst zu werden.

6. Lebensmittelzubereitungsvorrichtung nach einem der Ansprüche 1 bis 4, wobei die Lebensmittelzubereitungsvorrichtung ferner Folgendes umfasst:
einen Detektionsmechanismus, der dazu ausgelegt ist, einen Montagezustand der Behälteranordnung (2) und des Körpers (1) zu detektieren und die Arbeit der Antriebsanordnung (5) entsprechend einem Detektionsergebnis zu steuern;
wobei der Detektionsmechanismus vorzugsweise Folgendes umfasst:
ein zweites Abfühlelement (72), wobei die Behälteranordnung (2) mit einem Auslöseelement (26) bereitgestellt ist; und wobei, wenn die Behälteranordnung (2) auf dem Körper (1) platziert wird, das Auslöseelement (26) das zweite Abfühlelement (72) auslöst, sodass dieses bewirkt, dass die Antriebsanordnung (5) das erste Verriegelungselement (4) antreibt, damit es sich in die verriegelte Position bewegt.

7. Lebensmittelzubereitungsvorrichtung nach Anspruch 6, wobei die Behälteranordnung (2) einen Hauptkörper und eine Abdeckung (21), die drehbar mit dem Hauptkörper übereinstimmt; und wobei, wenn die Abdeckung (21) und der Hauptkörper in eine geschlossene Position rotieren, das Auslöseelement (26) in der Lage ist, das zweite Abfühlelement (72) auszulösen.

8. Lebensmittelzubereitungsvorrichtung nach Anspruch 7, wobei das Auslöseelement (26) mit dem Körper gleitend verbunden ist und eine Rücksetzfunktion aufweist;
wobei die Abdeckung (21) vorzugsweise drehbar mit dem Hauptkörper übereinstimmt, wobei eine erste geneigte Oberfläche (211) auf der Abdeckung (21) bereitgestellt ist und eine zweite geneigte Oberfläche (261) auf dem Auslöseelement (26) bereitgestellt ist;
wobei, wenn die Abdeckung (21) in einer Festzieh-Schraubrichtung relativ zu dem Hauptkörper rotiert, die erste geneigte Oberfläche (211) entlang der zweiten geneigten Oberfläche (261) gleitet und das Auslöseelement (26) zum Gleiten zwingt, sodass das Auslöseelement (26) in der Lage ist, das zweite Abfühlelement (72) auszulösen;
wobei, wenn die Abdeckung (21) in einer Löse-Schraubrichtung relativ zu dem Hauptkörper rotiert, die erste geneigte Oberfläche (211) und die zweite geneigte Oberfläche (261) allmählich voneinander gelöst werden und das Auslöseelement (26) zurückgesetzt wird.

9. Lebensmittelzubereitungsvorrichtung nach Anspruch 7, wobei, wenn die Behälteranordnung (2) mit dem Körper (1) verriegelt ist, die Abdeckung (21) dazu ausgelegt ist, mit dem Hauptkörper verriegelt zu sein;
wobei die Behälteranordnung (2) vorzugsweise bewegbar mit einem zweiten Verriegelungselement (61) verbunden ist und wobei, wenn das erste Verriegelungselement (4) sich in die verriegelte Position bewegt, das erste Verriegelungselement (4) das zweite Verriegelungselement (61) antreibt, damit es sich bewegt, um die Abdeckung (21) zu verriegeln;
wobei das zweite Verriegelungselement (61) vorzugsweise verschiebbar mit dem Hauptkörper verbunden ist und eine Rücksetzfunktion aufweist und wobei, wenn das zweite Verriegelungselement (61) zurückgesetzt wird, die Abdeckung (21) von dem Hauptkörper gelöst wird.

10. Lebensmittelzubereitungsvorrichtung nach Anspruch 9, wobei die Abdeckung (21) drehbar mit dem Hauptkörper übereinstimmt, ein Block (212) an einem Boden der Abdeckung (21) bereitgestellt ist und das erste Verriegelungselement (4) das zweite Verriegelungselement (61) antreibt, damit es sich in den Boden der Abdeckung (21) hinein erstreckt und an dem Block (212) anliegt, um zu verhindern, dass die Abdeckung (21) in eine Löse-Schraubrichtung relativ zu dem Hauptkörper rotiert;
wobei vorzugsweise eine dritte geneigte Oberfläche (42) auf dem ersten Verriegelungselement (4) bereitgestellt ist und wobei, wenn das erste Verriegelungselement (4) sich in die verriegelte Position bewegt, das zweite Verriegelungselement (61) entlang der dritten geneigten Oberfläche (42) gleitet.

## Revendications

1. Dispositif de préparation d'aliments, comprenant un corps (1) et un ensemble récipient (2), le dispositif de préparation d'aliments comprenant en outre un ensemble d'entraînement (5) et un premier élément de verrouillage (4) capable de tourner le long d'une direction circonférentielle du corps (1), l'ensemble d'entraînement (5) étant configuré pour entraîner le premier élément de verrouillage (4) à se déplacer vers une position verrouillée ou une position déverrouillée ; lorsque le premier élément de verrouillage (4) est dans la position verrouillée, le premier élément de verrouillage (4) verrouille l'ensemble récipient (2) sur le corps (1) ; lorsque le premier élément de verrouillage (4) est dans la position déverrouillée, l'ensemble récipient (2) peut être séparé du corps (1) ;
dans lequel le corps (1) inclut un boîtier supérieur (11) et un boîtier inférieur (12), boîtiers entre lesquels est formée une cavité de montage pour accepter un système d'alimentation et un système de commande, le corps (1) comprend un plateau (14), ledit plateau (14) est prévu sur le boîtier supérieur (11), et est pourvu d'une rainure de montage pour supporter l'ensemble récipient (2),
moyennant quoi lorsque l'ensemble récipient (2) est agencé sur le corps (1), une extrémité inférieure de l'ensemble récipient (2) est insérée dans le plateau (14) ;
**caractérisé en ce que** :
ledit plateau (14) inclut une plaque de fond (142) et une plaque latérale reliée à la plaque de fond (142), et la plaque latérale et la plaque de fond (142) sont enfermées pour former la rainure de montage utilisée pour accepter la base de l'ensemble récipient (2), dans lequel la forme de section transversale de la plaque latérale est de préférence en forme de U, de sorte que l'élément de verrouillage (4) peut être agencé dans la structure à double couche de la plaque latérale ; la plaque latérale incluant une plaque intérieure (143) et une plaque extérieure (144) avec une cavité formée entre la plaque intérieure (143) et la plaque extérieure (144), et une rainure (141) est agencée sur la plaque intérieure (143) et communique avec la cavité ; et
le premier élément de verrouillage (4) est agencé de manière coulissante dans la cavité et peut coulisser le long de la direction circonférentielle de la cavité et peut tourner le long de la direction circonférentielle du plateau (14) et s'étendre dans ou hors de la rainure (141).

2. Dispositif de préparation d'aliments selon la revendication 1, dans lequel l'ensemble récipient (2) est monté verticalement sur le corps (1) ; l'ensemble récipient (2) est pourvu d'une partie de limitation convexe (241) sur sa paroi latérale, et le premier élément de verrouillage (4) est pourvu d'une partie de mise en butée (41) ; et l'ensemble d'entraînement (5) est capable d'entraîner la partie de mise en butée (41) pour qu'elle s'étende dans ou hors d'une partie supérieure de la partie de limitation (241) pendant la rotation du premier élément de verrouillage (4).

3. Dispositif de préparation d'aliments selon la revendication 2, dans lequel un côté intérieur de la rainure de montage est pourvu de la rainure (141) qui est capable de recevoir la partie de limitation (241) ; et la partie de mise en butée (41) est capable de s'étendre dans ou hors de la rainure (141) le long de la direction circonférentielle du corps (1).

4. Dispositif de préparation d'aliments selon la revendication 1, dans lequel l'ensemble d'entraînement (5) comprend :
un élément de connexion (52), et l'élément de connexion (52) est connecté au premier élément de verrouillage (4) avec une extrémité ; et
un élément d'entraînement agencé dans le corps (1), et l'élément d'entraînement est configuré pour entraîner l'élément de connexion (52) à se déplacer.

5. Dispositif de préparation d'aliments selon l'une quelconque des revendications 1 à 4, dans lequel le dispositif de préparation d'aliments comprend en outre :
un mécanisme de détection configuré pour détecter si le premier élément de verrouillage (4) est déplacé vers une position désignée pour commander le démarrage ou l'arrêt de l'ensemble d'entraînement (5) ;
de préférence, le mécanisme de détection comprend :
un premier élément de détection (75) configuré pour être capable d'être déclenché par le premier élément de verrouillage (4) dans la position verrouillée ; et
un troisième élément de détection (77) configuré pour pouvoir être déclenché par le premier élément de verrouillage (4) dans la position déverrouillée.

6. Appareil selon l'une quelconque des revendications 1 à 4, dans lequel le dispositif de préparation d'aliments comprend en outre :
un mécanisme de détection configuré pour détecter un état de montage de l'ensemble récipient (2) et du corps (1), et pour commander le fonctionnement de l'ensemble d'entraînement (5) en fonction d'un résultat de détection ;
de préférence, le mécanisme de détection comprend :
un deuxième élément de détection (72), dans lequel l'ensemble récipient (2) est pourvu d'un élément de déclenchement (26) ; et lorsque l'ensemble récipient (2) est placé sur le corps (1), l'élément de déclenchement (26) déclenche le deuxième élément de détection (72) pour amener l'ensemble d'entraînement (5) à entraîner le premier élément de verrouillage (4) à se déplacer vers la position verrouillée.

7. Dispositif de préparation d'aliments selon la revendication 6, dans lequel l'ensemble récipient (2) comprend un corps principal et un couvercle (21) adapté de manière rotative au corps principal ; et lorsque le couvercle (21) et le corps principal tournent vers une position fermée, l'élément de déclenchement (26) est capable de déclencher le deuxième élément de détection (72).

8. Dispositif de préparation d'aliments selon la revendication 7, dans lequel l'élément de déclenchement (26) est connecté de manière coulissante au corps et présente une fonction de réinitialisation ;
de préférence, le couvercle (21) est adapté de manière rotative au corps principal, une première surface inclinée (211) est prévue sur le couvercle (21), et une deuxième surface inclinée (261) est prévue sur l'élément de déclenchement (26) ;
lorsque le couvercle (21) tourne dans une direction de serrage par vissage par rapport au corps principal, la première surface inclinée (211) coulisse le long de la deuxième surface inclinée (261) et pousse l'élément de déclenchement (26) à coulisser, de sorte que l'élément de déclenchement (26) est capable de déclencher le deuxième élément de détection (72) ;
lorsque le couvercle (21) tourne dans une direction de vissage-desserrage par rapport au corps principal, la première surface inclinée (211) et la deuxième surface inclinée (261) sont séparées graduellement l'une de l'autre, et l'élément de déclenchement (26) est réinitialisé.

9. Dispositif de préparation d'aliments selon la revendication 7, dans lequel lorsque l'ensemble récipient (2) est verrouillé avec le corps (1), le couvercle (21) est configuré pour être verrouillé avec le corps principal ;
de préférence, l'ensemble récipient (2) est connecté de manière mobile à un second élément de verrouillage (61), et lorsque le premier élément de verrouillage (4) se déplace vers la position verrouillée, le premier élément de verrouillage (4) entraîne le second élément de verrouillage (61) à se déplacer pour verrouiller le couvercle (21) ;
de préférence, le second élément de verrouillage (61) est connecté de manière coulissante au corps principal et présente une fonction de réinitialisation, et lorsque le second élément de verrouillage (61) est réinitialisé, le couvercle (21) est déverrouillé à partir du corps principal.

10. Dispositif de préparation d'aliments selon la revendication 9, dans lequel le couvercle (21) est adapté de manière rotative au corps principal, un bloc (212) est prévu au niveau d'un fond du couvercle (21), et le premier élément de verrouillage (4) entraîne le second élément de verrouillage (61) à s'étendre dans le fond du couvercle (21) et vient en butée contre le bloc (212) pour empêcher le couvercle (21) de tourner dans une direction de vissage-desserrage par rapport au corps principal ;
de préférence, une troisième surface inclinée (42) est prévue sur le premier élément de verrouillage (4), et lorsque le premier élément de verrouillage (4) se déplace vers la position verrouillée, le second élément de verrouillage (61) coulisse le long de la troisième surface inclinée (42).
